(19) Europäisches Patentamt / European Patent Office / Office européen des brevets

(11) **EP 2 730 611 B1**

(12) **EUROPEAN PATENT SPECIFICATION**

(45) Date of publication and mention of the grant of the patent:
**04.01.2017 Bulletin 2017/01**

(51) Int Cl.:
**C08L 23/08** *(2006.01)*    **A01G 25/02** *(2006.01)*

(21) Application number: **12007620.3**

(22) Date of filing: **09.11.2012**

(54) **DRIP IRRIGATION PIPE COMPRISING A POLYMER COMPOSITION COMPRISING A MULTIMODAL POLYETHYLENE BASE RESIN**

TROPFENBEWÄSSERUNGSROHR MIT EINER POLYMERZUSAMMENSETZUNG, DIE EIN MULTIMODALES POLYETHYLENBASISHARZ UMFASST

TUYAU D'IRRIGATION AU GOUTTE-À-GOUTTE COMPRENANT UNE COMPOSITION POLYMÈRE AVEC UNE RÉSINE À BASE DE POLYÉTHYLÈNE MULTIMODAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.05.2014 Bulletin 2014/20**

(73) Proprietors:
- **Abu Dhabi Polymers Company Limited (Borouge)**
  **Abu Dhabi (AE)**
- **Borealis AG**
  **1220 Wien (AT)**

(72) Inventors:
- **Motha, Kshama**
  **00990 Helsinki (FI)**
- **Nilsson, Anette**
  **444 55 Stenungsund (SE)**
- **Nikhade, Prashant**
  **400607 Maharashtra (IN)**
- **Dasgupta, Chanchal**
  **400101 Mumbai (IN)**
- **Asting, Johan**
  **Dubai (AE)**

(74) Representative: **Kador & Partner**
**Corneliusstraße 15**
**80469 München (DE)**

(56) References cited:
**EP-A1- 1 574 549**      **CN-A- 1 569 940**
**US-A- 4 616 055**       **US-A1- 2006 202 381**
**US-A1- 2010 203 277**

**Description**

The present invention relates to a drip irrigation pipe made from a polymer composition comprising a multimodal polyethylene base resin, to pellets of said polymer composition, to a process for producing such a pipe, and to the use of said polymer composition for the production of a drip irrigation pipe.

In agriculture (farming including fruit production) and other planted green areas like private and public gardens and golf courses, one of the main types of irrigation systems is drip irrigation. The pipes for drip irrigation system have perforations arranged at intervals along the pipe wall and typically also so called "emitters", known also e.g. as (drip) inserts, drippers or fittings, which are inserted to the pipe wall at the location of the perforation and are typically designed to charge water at predetermined rate from said perforation.

Drip irrigation pipes are normally thin-walled with typical diameter of less than 35 mm. The cross-section can be round or flattened to an ellipse shape.

The perforations and emitters are typically introduced to the pipe wall using either of the two process known as in-line or on-line -process.

In the on-line process the pipe producer supplies the irrigation pipe without perforations and emitters to the end user, e.g. farmer. The end user punches the perforations and inserts the emitters into the punctured pipe wall before the end use. Thereby, the emitters are inserted into the perforations from the outside of the pipe.

In the in-line process the perforations and emitters are provided by the pipe producer during the pipe production process. The difference is in the order and method for introducing said perforations and emitters into the pipe. Accordingly, the emitters are first inserted into the inner pipe wall, at intervals along the pipe length, at time of forming the pipe. The obtained pipe with emitters is then perforated (punched) further downstream of the process.

The "on-line" irrigation pipes are typically for wide space crop irrigation and "in-line" irrigation pipes for close space crop irrigation (distance between plants shorter than in wide space crop).

The in-line process is material-wise and production-wise more demanding than the on-line process. Accordingly, in the in-line process the emitters are placed inside the pipe at point of forming, typically at point of extruding, the shape of pipe. Thus, the inserted emitters adhere to the hot (and still "soft") inner wall of the freshly formed pipe. The adherence of the emitter at the inner wall must be sufficient to keep the emitter in fixed position during the perforation step and at the end use.

Due to different insertion techniques the emitters for the in-line process are different from those of the on-line process, and have typically cylindrical or flat rectangular shape. Moreover, one surface of the emitter for in-line process, which surface is intended to be in contact with the inner wall of the pipe, is provided with a water discharge arrangement(s) comprising a water path pattern ending to an intended water discharge point. The pipe is punched at said intended water discharge point of the emitter. It is thus important that the emitter is sufficiently adhered to the inner pipe wall to enable precise punching at the intended water discharge points along the length of the pipe. On the other hand, the adherence should not be too tight against the inner wall to enable the water flow within the water path and the water discharge from the intended discharge point. The correct insertion of the emitter (i.e. the surface with water discharge arrangement(s) become in contact with the inner wall) and sufficient adherence plays very important role to enable to punch pipe wall precisely at intended water discharge points of the emitters and finally the desired water discharge performance at the end use site. Irrigation pipes produced by in-line process can result in more controlled performance of irrigation pipe system compared to the irrigation pipes produced by on-line. However, pipe polymer materials presently offered by the polymer suppliers have often a drawback of not fully meeting the above demanding requirements.

Naturally the irrigation pipe production should be industrially feasible, which can be challenging especially in case of in-line production.

Additionally, irrigation pipes are often folded and stored in folded form before and/or after the use. Further, intentional or unintentional folding can occur at the end use site. The folding causes the so-called kinking problem, i.e. the opening angle at the fold should be open enough to enable the water pass through the folded part of the pipe for providing a continuous water flow.

WO 2005/095509 discloses a polymer composition comprising a multimodal ethylene polymer composition for the use in drip irrigation pipes. The pipes are shown to have good mechanical properties but the document is silent of the water discharge behavior.

There is still need for an improved polymer composition for the production of drip irrigation pipes with good water flow discharge performance together with good processing behavior for providing drip irrigation pipes, and, particularly, for the production of drip irrigation pipes in in-line process with advantageous perforation and water discharge charge quality and at the same time being producible at industrially feasible production rates.

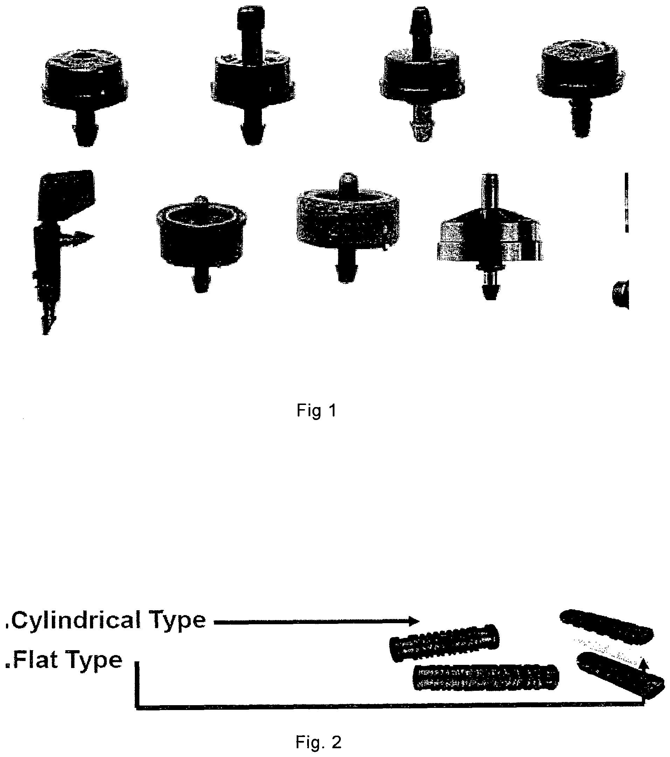

Figures 1 and 2 illustrate the emitters for the on-line process, and, respectively, for the in-line process suitable for the present invention.

The present invention therefore relates to a drip irrigation pipe provided with perforations in the pipe wall for discharging water, which perforations are arranged at intervals along the length of the pipe, wherein the pipe comprises a polymer composition comprising

(a) a polymer base resin comprising a multimodal ethylene polymer wherein the base resin has a density of less than 930 kg/m$^3$, determined according to ISO 1183-1:2004; and

(b) carbon black present in the polymer composition in an amount of 1.0 wt% to 10 wt%;

wherein the polymer composition has a molecular weight distribution Mw/Mn of 11.0 or less, determined by GPC, and a MFR$_5$ of 1.7 g/10 min or more, determined according to ISO 1133; and the multimodal ethylene polymer comprises a low molecular weight (LMW) component and a high molecular weight (HMW) component, wherein the weight average molecular weight Mw of the HMW component is higher than the weight average molecular weight Mw of the LMW component, the LMW component is present in the multimodal ethylene polymer in an amount of 35 wt.% to 50 wt.% and the HMW component is present in the multimodal ethylene polymer in an amount 50 wt.% to 65 wt.%.

The drip irrigation pipe and the polymer composition of the drip irrigation pipe of invention are referred herein also shortly as irrigation pipe and polymer composition. Similarly, the polymer base resin (a), the multimodal ethylene polymer of the base resin (a) and, respectively, carbon black (b) of the polymer composition of the invention are also referred as base resin, multimodal ethylene polymer and, respectively carbon black.

The property combination of the multimodal ethylene polymer used to produce the irrigation pipe provides surprisingly excellent water dripping discharge performance to the resulting irrigation pipe and, furthermore, can be produced at industrially advantageous production rate. The multimodal ethylene polymer and the claimed MFR and MWD of the polymer composition provide i.a. an unexpectedly good die swell properties which contributes to excellent processing performance and to improved water discharge performance as explained later below in context of the production process and detailed properties of the irrigation pipe. Preferably the irrigation pipe is provided with emitters arranged at the location of the perforation for controlling the water discharge from the perforation.

As to definitions, "polyethylene" or "ethylene polymer" can be homopolymer or copolymer of ethylene with at least one comonomer(s). An "ethylene homopolymer" consists essentially of ethylene monomer units. Such ethylene homopolymer is void of any comonomer that is added on purpose to copolymerize with ethylene. Any traces of a comonomer possibly present in a reactor in industrial scale polymerization are excluded within the meaning of comonomer.

The "at least one comonomer" of the "copolymer of ethylene" is preferably at least one alpha-olefin comonomer selected from an alpha-olefin comonomer comprising from 3 to 12 carbon atoms, preferably from 4 to 8 carbon atoms. Suitable alpha-olefin comonomer species are 1-butene, 1-hexene and 1-octene. Thereby, 1-butene or 1-hexene are mostly preferred. Naturally, the amount of the comonomer depends e.g. on the desired final density of the polymer.

"Multimodal" means herein an ethylene polymer comprising at least two polyethylene fractions, which have been produced under different polymerisation conditions, including differences in any of process conditions and/or catalyst system, resulting in different (weight average) molecular weights and/or different comonomer contents for the fractions. The prefix "multi" relates to the number of different polymer fractions of the composition and includes "bimodal" composition consisting of two fractions.

E.g. the multimodality re weight average molecular weight means that the form of the molecular weight distribution curve, i.e. the appearance of the graph of the polymer weight fraction as function of its molecular weight, of such a multimodal polyethylene will show two or more maxima or at least be distinctly broadened in comparison with the curves for the individual fractions.

The multimodal ethylene polymer according to the invention preferably comprises a low molecular weight component (LMW) and a high molecular weight component (HMW), wherein the weight average molecular weight (Mw) of the HMW component is higher than the Mw of the LMW component. Accordingly, the "multimodal" means herein multimodal with respect to molecular weight distribution (Mw/Mn, MWD).

The base resin of the polyethylene composition comprises the multimodal ethylene polymer as defined above, below or in claims.

The LMW component is preferably present in the multimodal ethylene polymer in an amount of 35 wt% to 50 wt%, preferably 38 wt% to 50 wt%, preferably 38 wt% to 48 wt%, preferably 38 wt% to 46 wt%.

Preferably, the HMW component is present in the multimodal ethylene polymer in an amount of 50 wt% to 65 wt%, preferably of 50 wt% to 62 wt%, preferably of 52 wt% to 62 wt%, preferably 54 wt% to 62 wt%.

Preferably, the weight ratio of the LMW component to the HMW component is (35-50):(65-50), preferably (38-50):(62-50), preferably (38-48):(62-52), more preferably (38-46):(62-54).

Moreover, the multimodal ethylene polymer can comprise further polymer components which are different from said LMW and HMW components with respect to weight average Mw or comonomer content or both.

However, it is preferred that the multimodal ethylene polymer consists of said HMW component, said LMW component and optionally a prepolymer fraction. The optional prepolymer fraction is in an amount of up to 20 wt%, more preferably up to 10 wt%, and most preferably up to 5 wt% of the total amount of the multimodal ethylene polymer. The multimodal ethylene polymer most preferably consists of said HMW component, said LMW component and a prepolymer fraction. The amount of the prepolymer fraction is calculated to the weight amount of the LMW component, which is in turn based on the total amount of the multimodal ethylene polymer.

The multimodal ethylene polymer, preferably the base resin, has preferably a melt flow rate $MFR_5$ of 6.0 g/10 min or less, more preferably 5.0 g/10 min or less, most preferably 4.0 g/10 min or less.

Preferably, multimodal ethylene polymer, preferably the base resin, has a melt flow rate $MFR_5$ of 1.8 g/10 min or more, more preferably of 2.0 g/10 min or more.

The multimodal ethylene polymer, preferably the base resin, has preferably a melt flow rate $MFR_2$ of 1.5 g/10 min or less, more preferably 1.0 g/10 min or less.

Preferably, the multimodal ethylene polymer, preferably the base resin, has a melt flow rate $MFR_2$ of 0.50 g/10 min or more, more preferably of 0.60 g/10 min or more.

Preferably, the multimodal ethylene polymer, preferably the base resin, has a melt flow rate $MFR_{21}$ of 30 g/10 min or more, more preferably of 40 g/10 min or more, most preferably of 45 g/10 min or more.

It is further preferred that the multimodal ethylene polymer, preferably the base resin, has a melt flow rate $MFR_{21}$ of below 100 g/10 min, more preferably 90 g/10 min or less, most preferably 80 g/10 min or less.

Most preferably, the multimodal ethylene polymer, preferably the base resin, has a melt flow rate $MFR_{21}$ of 45 to 90 g/10 min, preferably of 47 to 80 g/10 min and most preferably of 48 to 75 g/10 min.

The multimodal ethylene polymer, preferably the base resin, has a $M_w/M_n$ of equal to or less than 11.0, preferably of equal to or less than 10.7, and most preferably of equal to or less than 10.5. The lower limit of the $M_w/M_n$ is preferably equal to or higher than 6.0, more preferably equal to or higher than 8.0.

The multimodal ethylene polymer is preferably a multimodal copolymer of ethylene with at least one alpha-olefin, which is more preferably a linear low density ethylene copolymer (LLDPE). The term LLDPE has a well known meaning.

Said at least one alpha-olefin comonomer of the multimodal copolymer of ethylene, preferably of LLDPE, as defined above, below or in claims, is selected from an alpha-olefin comonomer comprising from 3 to 12 carbon atoms, preferably from 4 to 8 carbon atoms. Suitable alpha-olefin comonomer species are 1-butene, 1-hexene and 1-octene. Thereby, 1-butene or 1-hexene are mostly preferred.

The copolymer of ethylene, preferably LLDPE, as the multimodal ethylene polymer has preferably a comonomer content of more than 0.3 mol%, more preferably more than 3 mol%.

Further, the copolymer of ethylene, preferably LLDPE, as the multimodal. ethylene polymer has preferably a comonomer content of below 15 mol%, more preferably below 10 mol%.

The LMW component of copolymer of ethylene, preferably of LLDPE, as the multimodal ethylene polymer can be an ethylene homopolymer or a copolymer of ethylene with at least one alpha-olefin comonomer as defined above for the multimodal ethylene polymer.

The HMW component of copolymer of ethylene, preferably of LLDPE, as the multimodal ethylene polymer can be an ethylene homopolymer or a copolymer of ethylene with at least one alpha-olefin comonomer as defined above for the multimodal ethylene polymer.

The multimodal ethylene polymer, which preferably is a LLDPE, preferably the base resin, has a density of less than 930 kg/m$^3$, preferably of 925 kg/m$^3$ or less and most preferably of 923 kg/m$^3$ or less. The lower limit of the density of the multimodal ethylene polymer, which preferably is a LLDPE, preferably of the base resin, is usually 900 kg/m$^3$. More preferably, the density of the multimodal ethylene polymer, which preferably is a LLDPE, preferably of the base resin, is 917 kg/m$^3$ or higher, more preferably 918 kg/m$^3$ or higher.

In a preferred embodiment the multimodal ethylene polymer is a multimodal copolymer of ethylene, preferably LLDPE, as defined above or in claims, where at least the HMW component is a copolymer of ethylene, more preferably, where said HMW and LMW components are copolymers of ethylene as defined above or in claims. Moreover, if, and preferably, the LMW component is a copolymer of ethylene, then HMW component of the multimodal ethylene polymer has higher comonomer content than the LMW component.

The multimodal ethylene polymer is preferably obtainable by polymerization with a Ziegler-Natta catalyst system, preferably a Ziegler-Natta catalyst system as described further later below.

As to carbon black (b), the carbon black can be of any type feasible for use in irrigation pipes. Carbon black has preferably an average particle size of from 0.01 to 0.25 microns and max volatile matter of 9wt%. The type of carbon black can e.g. be furnace carbon black, which furnace carbon black has a very well known meaning. Suitable carbon blacks are commercially available from several suppliers including Cabot and Colombian, and can be selected accordingly by a person skilled in the art.

Carbon black is preferably present in the polymer composition in an amount of 1.0 to 10 wt%, more preferably in an amount of 1.5 to 9.0 wt%, most preferably in an amount of 1.8 to 8.0 wt%, based on the total amount of the polymer composition (100 wt%).

In addition to the base resin and carbon black, usual additives for utilization with polyolefins, such as stabilizers (e.g. antioxidant agents), acid scavangers and/or anti-UV's, antistatic agents and utilization agents (such as processing aid agents) may be present in the polymer composition. Preferably, the total amount of these additives is 5 wt% or below, more preferably 2 wt% or below, most preferably 1 wt% or below, of the total amount of the polymer composition (100 wt%).

Carbon black can be added to polymer composition as such (neat) or in form of so-called master batch (CBMB), in which carbon black, and optionally further additives as defined above, are contained in concentrated form in a carrier polymer.

The optional carrier polymer is preferably a polyolefin, more preferably a 1) homo- or copolymer of ethylene polymerised using a coordination catalyst, preferably Ziegler-Natta catalyst, or 2) homo- or copolymer of ethylene polymerised in a high pressure polymerisation process using radical initiator(s). Preferable examples of 1) homo- or copolymer of ethylene produced using Ziegler Natta catalyst are high density polyethylene (HDPE), medium density polyethylene (MDPE) or linear low density ethylene copolymer (LLDPE). Preferable example of 2) polyethylene produced in high pressure process is well known low density polyethylene (LDPE). The meaning of HDPE, MDPE, LLDPE and LDPE are well known in polymer field. The LLDPE, MDPE or HDPE polyethylene as the optional carrier polymer can have any modality with respect to weight average molecular weight distribution and/or comonomer distribution. Moreover, also i.a. the density and MFR of the optional carrier polymer may be varied. It is well known and within the skills of a skilled person to choose the type of the optional carrier polymer and the properties thereof depending on the polymer properties of the base resin to provide suitable dispersion of the CBMB to the base resin.

The CBMB preferably comprises carbon black in an amount of from 20 to 50 wt%, more preferably from 30 to 50 wt%.

The optional carrier polymer of CBMB is not calculated to the amount of the base resin.

Preferably, the polyethylene composition comprises, more preferably consists of, the base resin, said carbon black master batch CBMB and optional additives. It is noted that one or more of the optional additives mentioned above may be added in form of master batch containing carrier polymer. However, the carrier polymer(s) of any additive master batches are calculated to the total amount of the additive(s) present in the polymer composition.

The amounts of the components, preferably of the base resin, carbon black, optional carrier polymer of the CBMB and optional additives, make up the total amount of the polymer composition of 100 wt%.

The base resin is preferably present in the polymer composition in an amount of more than 80 wt%, more preferably in an amount of 85 to 99 wt%, most preferably in an amount of 90 to 98 wt%, based on the total amount of the polymer composition (100 wt%).

The amount of the optional carrier polymer of the CBMB is 0 to 5 wt% based on the total amount of the polymer composition (100 wt%).

It is preferred that the carbon black is used in form of a CBMB.

Thus, the present invention preferably further provides a drip irrigation pipe as defined above, below or in claims, wherein the pipe comprises a polymer composition comprising

(a) a polymer base resin comprising a multimodal ethylene polymer wherein the base resin has a density of less than 930 kg/m$^3$; and

(b1) a carbon black master batch (CBMB) comprising, preferably consisting of, said carbon black (b), a carrier polymer and optional additive(s);

as defined above, below or claims including, in any order, the preferred embodiments, properties and property ranges of thereof. The components of the CBMB (b1) are dispersed with the other components of the polymer composition, preferably with the base resin and optional additive(s).

The polymer composition preferably has a melt flow rate $MFR_5$ of 6.0 g/10 min or less, more preferably 5.0 g/10 min or less, most preferably 4.0 g/10 min or less.

Preferably, the polymer composition has a melt flow rate $MFR_5$ of 1.8 g/10 min or more, more preferably of 2.0 g/10 min or more.

The polymer composition preferably has a melt flow rate $MFR_2$ of 1.5 g/10 min or less, more preferably 1.0 g/10 min or less.

Preferably, the polymer composition has a melt flow rate $MFR_2$ of 0.5 g/10 min or more, more preferably of 0.6 g/10 min or more.

Preferably, the polymer composition has a melt flow rate $MFR_{21}$ of 30 g/10 min or more, more preferably of 40 g/10 min or more, most preferably of 45 g/10 min or more.

It is further preferred that the polymer composition has a melt flow rate $MFR_{21}$ of below 100 g/10 min, more preferably 90 g/10 min or less, most preferably 80 g/10 min or less.

It is preferred that the polymer composition has a melt flow rate $MFR_{21}$ of 45 to 90 g/10 min, more preferably of 47 to 80 g/10 min and most preferably of 48 to 75 g/10 min.

The polymer composition according to the present invention has a rather narrow molecular weight distribution which can be seen by its ratio of the weight average molecular weight and the number average molecular weight $M_w/M_n$.

The composition has a $M_w/M_n$ of equal to or less than 11.0, preferably of equal to or less than 10.7, and most preferably of equal to or less than 10.5. The lower limit of the $M_w/M_n$ is preferably equal to or higher than 6.0, more preferably equal to or higher than 8.0.

The multimodal ethylene polymer as defined above, including the preferred embodiments, properties and property ranges thereof, can be commercially available or can preferably be polymerized in the presence of a Ziegler-Natta catalyst in a multi stage polymerization process. A multi-stage polymerization process denotes a process in which a polymer comprising two or more fractions is produced by polymerizing each of the at least two polymer fractions in a separate reaction stage, usually with different reaction conditions in each stage which comprises a polymerization catalyst. The polymerization is preferably followed by a compounding step.

It is preferred that the LMW component and the HMW component of the multimodal ethylene polymer are polymerized at different stages of the multi-stage process in any order. It is thereby preferred that the LMW component and the HMW component are polymerized in subsequent stages.

It is preferred that the multimodal ethylene polymer according to the invention is polymerized in at least one slurry phase reactor and at least one gas phase reactor.

In a preferred embodiment the LMW component is polymerized in a slurry phase reactor, preferably a loop reactor, and the HMW component are polymerized in a gas phase reactor in any order.

In any order denotes that there is no preferred order in which the subsequent polymerization stages of the multi-stage process are arranged.

In one preferred embodiment of the process according to the invention, the LMW component is polymerized in the first reaction stage.

It is thereby preferred that the HMW component is polymerized in the second reaction stage in the presence of the LMW component.

Preferably, the multistage process consists of a reaction stage conducted in a slurry phase reactor followed by a reaction stage conducted in gas phase reactors. Optionally, the reaction stage conducted in the slurry phase reactor is thereby preceded by a prepolymerization stage.

It is preferred that the LMW component is polymerized in a slurry phase reactor.

In slurry phase polymerisation the polymer particles formed in the polymerisation together with the catalyst fragmented and dispersed within the particles, are suspended in fluid hydrocarbon. The slurry phase is agitated to enable the transfer of reactants from the fluid into the particles. The polymerisation in the slurry phase reactor usually takes place in an inert diluent, typically a hydrocarbon diluent which is selected from a group comprising $C_3$ to $C_8$ hydrocarbons, such as methane, ethane, propane, n-butane, isobutane, hexanes such as n-hexane, heptanes, octanes or their mixtures. Preferably the diluent is a low boiling hydrocarbon having from 1 to 4 carbon atoms or a mixture of such hydrocarbons. An especially preferred diluent is propane, possibly containing minor amounts of methane, ethane and/or butane. The inert diluent can be the same or different in the different polymerisation steps.

The ethylene content in the fluid phase of the slurry in the slurry phase reactor may be from 0.5 to 50 % by mole, preferably from 1 to 20 % by mole, and in particular from 2 to 10 % by mole.

The temperature in the slurry phase polymerisation is typically from 50 to 115 °C, preferably from 60 to 110 °C and in particular from 70 to 100 °C. The pressure is typically from 1 to 150 bar, preferably from 1 to 100 bar.

The slurry phase polymerisation may be conducted in any known reactor used for slurry phase polymerisation. Such reactors include a continuous stirred tank reactor and a loop reactor. It is especially preferred to conduct the polymerisation in a loop reactor. In such reactors the slurry is circulated with a high velocity along a closed pipe by using a circulation pump. Loop reactors are generally known in the art and examples are given, for instance, in US-A-4,582,816, US-A-3,405,109, US-A-3,324,093, EP-A-479 186 and US-A-5,391,654.

It is sometimes advantageous to conduct the slurry phase polymerisation above the critical temperature and pressure of the fluid mixture. Such operations are described in US-A-5,391,654. In such an operation the temperature is typically at least 85 °C, preferably at least 90 °C. Furthermore the temperature is typically not higher than 110 °C, preferably not higher than 105 °C. The pressure under these conditions is typically at least 40 bar, preferably at least 50 bar. Furthermore, the pressure is typically not higher than 150 bar, preferably not higher than 100 bar. In a preferred embodiment the slurry phase polymerization step, is carried out under supercritical conditions whereby the reaction temperature and reaction pressure are above equivalent critical points of the mixture formed by hydrocarbon medium, monomer, hydrogen and optional comonomer and the polymerization temperature is lower than the melting temperature of the polymer formed.

The slurry may be withdrawn from the slurry phase reactor either continuously or intermittently. A preferred way of intermittent withdrawal is the use of settling legs where the slurry is allowed to concentrate before withdrawing a batch of the concentrated slurry from the reactor. The use of settling legs is disclosed, amongst others, in US-A-3,374,211, US-A-3,242,150 and EP-A-1 310 295. Continuous withdrawal is disclosed, amongst others, in EP-A-891 990, EP-A-1 415 999, EP-A-1 591 460 and WO-A-2007/025640. The continuous withdrawal is advantageously combined with a suitable concentration method as disclosed in EP-A-1 415 999 and EP-A-1 591 460.

The polyethylene fraction produced in the slurry phase reactor can be an ethylene homo- or copolymer fraction depending on the desired final multimodal polyethylene polymer. If polymerising a copolymer, comonomers preferably are selected from the group comprising 1-butene, 1-hexene, 4-methyl-1-pentene, 1-octene or their mixtures, especially preferred is 1-butene or 1-hexene. In a preferred embodiment in the slurry phase reactor an ethylene copolymer is polymerised in the presence of 1-butene as comonomer.

The residence time and the polymerisation temperature in the slurry phase reactor are adjusted in a known manner as to polymerise an ethylene homo- or copolymer fraction typically in an amount as defined above or in claims.

The polymer fraction produced in the slurry phase reactor preferably is transferred to at least one gas phase reactor.

In a fluidised bed gas phase reactor an olefin is polymerised in the presence of a polymerisation catalyst in an upwards moving gas stream. The reactor typically contains a fluidised bed comprising the growing polymer particles containing the active catalyst located above a fluidisation grid.

The polymer bed is fluidised with the help of a fluidisation gas comprising the olefin monomer, eventually comonomer(s), eventually MFR regulating agent(s) (also known as chain growth controllers or chain transfer agents), such as hydrogen, and eventually inert gas. The inert gas can thereby be the same or different as the inert gas used in the slurry phase reactor. The fluidisation gas is introduced into an inlet chamber at the bottom of the reactor. To make sure that the gas flow is uniformly distributed over the cross-sectional surface area of the inlet chamber the inlet pipe may be equipped with a flow dividing element as known in the art, e. g. US-A-4,933,149 and EP-A-684 871.

From the inlet chamber the gas flow is passed upwards through the fluidisation grid into the fluidised bed. The purpose of the fluidisation grid is to divide the gas flow evenly through the cross-sectional area of the bed. Sometimes the fluidisation grid may be arranged to establish a gas stream to sweep along the reactor walls, as disclosed in WO-A-2005/087261. Other types of fluidisation grids are disclosed, amongst others, in US-A-4,578,879, EP 600 414 and EP-A-721 798. An overview is given in Geldart and Bayens: The Design of Distributors for Gas-fluidised Beds, Powder Technology, Vol. 42, 1985.

The unreacted fluidisation gas is then removed from the top of the reactor, compressed and recycled into the inlet chamber of the reactor. Prior to the entry into the reactor fresh reactants are introduced into the fluidisation gas stream to compensate for the losses caused by the reaction and product withdrawal. It is generally known to analyse the composition of the fluidisation gas and introduce the gas components to keep the composition constant. The actual composition is determined by the desired properties of the product and the catalyst used in the polymerisation.

After that the gas is cooled in a heat exchanger to remove the reaction heat. The gas is cooled to a temperature which is lower than that of the bed to prevent the bed from being heated because of the reaction. It is possible to cool the gas to a temperature where a part of it condenses. When the liquid droplets enter the reaction zone they are vaporized. The vaporisation heat then contributes to the removal of the reaction heat.

This kind of operation is called condensed mode and variations of it are disclosed, amongst others, in WO-A-2007/025640, US-A-4,543,399, EP-A-699 213, and WO-A-94/25495. It is also possible to add condensing agents into the recycle gas stream, as disclosed in EP-A-696 293. The condensing agents are non-polymerisable components, such as propane, n-pentane, isopentane, n-butane or isobutane, which are at least partially condensed in the cooler.

The polymeric product may be withdrawn from the gas phase reactor either continuously or intermittently. Combinations of these methods may also be used. Continuous withdrawal is disclosed, amongst others, in WO-A-00/29452. Intermittent withdrawal is disclosed, amongst others, in US-A-4,621,952, EP-A-188 125, EP-A-250 169 and EP-A-579 426.

The bed level may be observed and controlled in a manner known in the art.

Also antistatic agent(s) may be introduced into the gas phase reactor if needed. Suitable antistatic agents and methods to use them are disclosed, amongst others, in US-A-5,026,795, US-A-4,803,251, US-A-4,532,311, US-A-4,855,370 and EP-A-560 035. They are usually polar compounds and include, amongst others, water, ketones, aldehydes alcohols.

The reactor may include a mechanical agitator to further facilitate mixing within the fluidised bed. An example of suitable agitator design is given in EP-A-707 513.

It is preferred that in the gas phase reactor the HMW component of the multimodal ethylene polymer according to the invention is polymerized.

The temperature in the gas phase polymerisation in the gas phase reactor typically is at least 70 °C. The temperature typically is not more than 105 °C, preferably not more than 95 °C. The pressure is typically at least 10 bar, preferably at least 15 bar but typically not more than 30 bar, preferably not more than 25 bar.

The residence time and the polymerisation temperature in the gas phase reactor are adjusted as such as to polymerise the multimodal ethylene polymer with the desired split between each reactor.

Moreover, the process conditions in each reactor, the comonomer feed, if any, and the MFR regulating agent feed, typically hydrogen feed, is adjusted to obtain the desired multimodal ethylene polymer properties as defined above or in claims, for example the density (comonomer feed) and MFR (hydrogen feed) of the final polymer. Such adjustment is within the skills of the skilled person.

In one embodiment of the present invention the process may further comprise a pre-polymerisation step which precedes the polymerisation steps. The purpose of the pre-polymerisation is to polymerise ethylene optionally together with other comonomer(s), preferably only ethylene, to form polymer in a small amount onto the catalyst at a low temperature and/or a low monomer concentration. By pre-polymerisation it is possible to improve the performance of the catalyst in slurry and/or modify the properties of the final polymer. The pre-polymerisation step may be conducted in slurry or gas phase. Preferably the pre-polymerisation is conducted in slurry. It is preferred that the optional prepolymerisation is effected before the actual polymerisation step in the slurry, preferably, loop reactor.

Thus, the pre-polymerisation step may be conducted in a loop reactor. The pre-polymerisation is then preferably conducted in an inert diluent, typically a hydrocarbon diluent such as methane, ethane, propane, n-butane, isobutene, pentanes, hexanes, heptanes, octanes or their mixtures. Preferably the diluent is a low boiling hydrocarbon having from 1 to 4 carbon atoms or a mixture of such hydrocarbons. The most preferred diluent is propane.

The temperature in the pre-polymerisation step is typically from 0°C to 90°C, preferably from 20°C to 80°C, more preferably from 40°C to 70°C.

The pressure is not critical and is typically from 1 bar to 150 bar, preferably from 10 bar to 100 bar.

As the preferred Ziegler Natta catalyst system, any system of Ziegler-Natta catalysts can be used suitable for polymerising polyethylene resins.

Preferably, the catalyst system is a supported Ziegler-Natta catalyst, more preferably containing a magnesium compound, an aluminium compound and a titanium compound supported on a particulate support.

The particulate support can be an inorganic oxide support, such as silica, alumina, titania, silica-alumina and silica-titania. Preferably, the support is silica.

The average particle size of the silica support can be typically from 10 to 100 $\mu$m. However, it has turned out that special advantages can be obtained if the support has an average particle size from 15 to 30 $\mu$m, preferably from 18 to 25 $\mu$m. Examples for suitable support materials are, for instance ES747JR produced and marketed by Ineos Silicas and SP9-491, produced and marketed by Grace.

The magnesium compound is preferably a reaction product of a magnesium dialkyl and an alcohol. The alcohol can be a linear or branched aliphatic monoalcohol. Preferably, the alcohol has from 6 to 16 carbon atoms. Branched alcohols are especially preferred, and 2-ethyl-1-hexanol is one example of the preferred alcohols. The magnesium dialkyl may be any compound of magnesium bonding to the two alkyl groups, which may be the same or different. Butyl-octyl magnesium is one example of the preferred magnesium dialkyls.

The aluminium compound is preferably a chlorine containing aluminium alkyl. Especially preferred compounds are aluminium alkyl dichlorides and aluminium alkyl sesquischlorides.

The titanium compound is preferably a halogen containing, more preferably clorine containing titanium compound. Especially preferred is titanium tetrachloride.

The catalyst can be prepared by sequentially contacting the carrier with the above mentioned compounds, as described in EP-A-688794. Alternatively, it can be prepared by first preparing a solution from the components and the contacting the solution with a carrier, as described in WO-A-01/55230.

The above mentioned solid catalyst component is contacted with an aluminium alkyl cocatalyst, preferably a trialkyl aluminium cocatalyst, which most preferably is triethyl aluminium, after which it can be used for polymerization. The contacting of the solid catalyst component and the cocatalyst can either be conducted prior to introducing the catalyst into the polymerization reactor, or it can be conducted by introducing the two components separately into the polymerization reactor.

The catalyst system can be fed to any polymerisation stage including the optional prepolymerisation step. Most preferably the catalyst system is only fed to the first polymerisation stage or, in case of optional prepolymerisation step, at least part of the catalyst system is fed to the prepolymerisation step preceding the first polymerisation stage. The catalyst may be transferred into the polymerisation zone by any means known in the art. It is thus possible to suspend the catalyst in a diluent and maintain it as homogeneous slurry.

As to the optional carrier polymer of CBMB (b1), when said carrier polymer is LLDPE copolymer, MDPE copolymer of HDPE homopolymer or copolymer, as defined above, it can be unimodal with respect to the molecular weight distribution and can be commercially available or be produced, depending on the modalty, e.g.in a single reactor using any reactor type as described above or in a multistage process as described above, and using polymerisation conditions as described above.

When said optional carrier polymer of said CBMB (b1) is LDPE homopolymer or copolymer produced in a high pressure process using a radical initiator, as defined above, then it can be commercially available or be produced in a tubular or autoclave reactor using radical initiator, typically peroxide(s), using e.g. conventional polymerisation conditions. Polymerisation in tubular or autoclave reactor is well known and well documented in the literature in the polymerisation field.

As subsequent step of the polymerisation process, the multimodal ethylene polymer or the optional carrier polymer of CBMB (b1) obtained from the reactor is typically compounded, preferably extruded in an extruder, optionally together with additive(s) and then pelletized to polymer pellets in a manner known in the art to form the base resin or the optional carrier polymer.

The carbon black as such or the CBMB (b1) of the polyolefin composition of the invention can be added at this subsequent compounding step or, alternatively, in a separate compounding step using the premade pellets of the base resin. Most preferably, the multimodal polyethylene (base resin), CBMB (b1) and optional additive(s) are pelletized in an extruder at a subsequent compounding step arranged in the production line of the polymerisation process.

The extrusion and pelletizing can be carried out in a known manner using well known extruder equipment supplied by extruder producers and conventional extrusion conditions. As an example of an extruder for the present compounding step may be those supplied by Japan Steel works, Kobe Steel or Farrel-Pomini, e.g. JSW 460P or JSW CIM90P.

It is preferred that the polymer composition of the invention is provided in pellet form to the irrigation pipe producer. The polymer composition is preferably pelletised in the subsequent compounding step arranged in the production line of the polymerisation process of the multimodal ethylene polymer of base resin (a). The use of such premade pellets of the polymer composition of the invention provides increased homogeneity to the polymer composition resulting in an irrigation pipe with better quality, e.g. in terms of mechanical and surface properties, compared to irrigation pipe which has been produced by adding the base resin, carbon black and optional additives separately to pipe extruder during the pipe production process.

Accordingly, the present invention further provides pellets of a polymer composition, wherein a pellet comprises, preferably consists of, the polymer composition of the invention as defined above, below or in claims.

The invention is further related to a process for producing the drip irrigation pipe according to any of the above described embodiments including the preferred properties and property ranges, comprising the steps of

- providing the polymer composition as defined above or in claims;

- mixing at least the polymer composition in a mixer, preferably in an extruder, to form a melt mixture of the polymer composition;

- forming, preferably extruding, the obtained melt mixture of the polymer composition into form of pipe, and

- punching perforations at intervals along the length of the formed, preferably extruded, pipe wall for discharging water from the punched perforations.

As mentioned above, advantageously, the carbon black, in the amounts as defined above or in claims, is homogeneously distributed in the pellets of the polymer composition which further contributes markedly to the quality, i.e. mechanical and surface properties, of the obtained irrigation pipe. Thus further preferably, pellets of the polymer composition are used in the process of the invention.

Accordingly, preferably the process of the invention comprises the steps of

- providing the polymer composition in form of pellets, wherein a pellet comprises, preferably consists of, the polymer composition as defined above or in claims;

- mixing at least said pellets of the polymer composition in a mixer, preferably in an extruder, to form a melt mixture of the polymer composition;

- forming, preferably extruding, the obtained melt mixture of polymer composition into form of pipe, and

- punching perforations at intervals along the length of the formed, preferably extruded, pipe wall for discharging water from the punched perforations.

It is preferred that the irrigation pipe comprises emitters at the location of the perforations of the pipe. Accordingly, preferably the process of the invention is:

- On-line process, wherein the the end user, e.g. farmer, punches the perforations at intervals along the length of the pipe and inserts the emitters into the formed perforations. Thereby, the emitters are inserted into the holes from the outside of the pipe. Or

- In-line process, wherein the perforations and emitters are provided by the pipe producer during the pipe production process. The difference is in the order and method how said perforations and emitters are introduced into the pipe. I.e in the in-line process the emitters are inserted into the inner pipe wall, at intervals (= emitters are inserted at certain distance from each other, as desired, depending on the end application) along the pipe length, at time of forming, preferably extruding, the pipe.

Both on-line and in-line processes for producing irrigation pipe are well known techniques in the field of pipe technology.

It is preferred that the process for producing the irrigation pipe of the invention is an in-line process comprising the steps of

- providing the polymer composition, preferably in form of pellets as defined above or in claims;

- mixing at least the polymer composition, preferably said pellets of the polymer composition, in a mixer, preferably in an extruder, to form a melt mixture of the polymer composition;

- forming, preferably extruding, the obtained melt mixture of polymer composition into form of pipe,

- inserting emitters at intervals into the inner pipe wall along the length of the pipe at time of the formation, preferably at time of extrusion, of said pipe shape, and

- punching perforations to the formed pipe wall at the location of the inserted emitter for discharging water from the punched perforation through said inserted emitter.

Preferably the irrigation pipe of the invention is produced by extrusion using a pipe extruder. Preferably the forming of the melt mixture is carried out in the pipe extruder at elevated temperature in a manner well known in the art. Pipe extruders are well known in the art and commercially available.

Moreover, the preferred pipe emitter feeding equipment for pipe extruders to insert the emitters inside the pipe during the pipe formation as well as perforation equipment for hole punching are well known in the art and commercially available.

The preferred in-line process and the "in-line" irrigation pipe are described below in further details.

Accordingly, the emitters are inserted into the inner pipe wall, at intervals along the pipe length, at time of forming, preferably by extruding, the pipe shape and before perforation (punching) further downstream of the process. Perforations are provided after cooling the formed pipe containing the inserted emitters. Perforation is provided by punching a hole to the pipe wall at the location of each emitter. After perforation the pipe is coiled for end use.

The perforation (punching) of the pipe is effected at the intended water path point of the emitter. In case the emitter has two or more water path arrangements the perforation (punching) is done at the location of each intended water discharge point.

The produced drip irrigation pipe according to the invention comprises, preferably consists of, the polymer composition as defined above in any of the described embodiments including preferred properties and property ranges, in any order.

The irrigation pipe has at least perforations along the length of the pipe. Preferably the irrigation pipe is provided with perforations in the pipe wall along the length of the pipe and emitters which locate at perforation points for controlling the water discharge in a desired manner.

The dimensions of the irrigation pipe can vary depending on the size of the intended pipe and on the desired irrigation performance at the end use site, and can be chosen accordingly as known in the art.

Preferably the pipe has a diameter of 35 mm or less, more preferably of 32 mm or less. The lower limit of the diameter is usually 5 mm or more.

The pipe preferably has a wall thickness of less than 3 mm, more preferably of less than 2.5 mm. The lower limit of the wall thickness is usually 0.3 mm or more.

The diameter of the perforations is preferably more than 1 mm.

The pipe preferably has a cross-section of round or ellipse shape. "Ellipse" in this regard means that the round cross-section is flattened along one axis of the cross-section to form an ellipse or oval shape.

It is preferred that the irrigation pipe of the invention is produced by the in-line process, i.e. is a product of an in-line pipe production process.

Due to different insertion techniques the emitters in in-line process are different from those of the on-line process.

The in-line emitter can contain one or more water path arrangement(s) arranged on one surface of the in-line emitter structure. The in-line emitter has typically either cylindrical structure or flat, rectangular or similar, (longitudionally) shaped structure with thickness, length and width depending on the size of the irrigation pipe and on the desired, water discharge performance at the end use site (referred herein as flat rectangular emitter).

Cylindrical emitters are used in cylindrical pipes and the diameter of the outer circumference is chosen so that the outer circumference contacts the inner wall of the pipe and is adhered to said inner wall. The water path arrangement(s) is arranged on the surface of the outer circumference of said cylindrical emitters. The length of the cylindrical emitter on the size of the irrigation pipe and on the desired, water discharge performance at the end use site. As an example said length can be 1 to 5 cm.

Flat rectangular emitters are typically used in flat pipes of ellipsoid shape. The size of the flat rectangular emitters varies depending on the size of the intended pipe and on the desired irrigation performance at end use site. As a preferable example, the thickness of flat rectangular typically of less than 0.5 to 4 mm, length typically of than 1 to 5 cm and width of 0.4 to 2.5 cm, depending on the size of the pipe and on the desired irrigation performance at end use site. The water path arrangement(s) is provided to at least one position on the surface of the flat rectangular emitter.

In cylindrical and flat rectangular shaped emitters of the in-line produced irrigation pipe, the water path(s) of the emitter leads to intended water discharge point and the punctured perforation of the pipe wall locates at this point.

Both in-line and on-line emitters are very well known in the state of the art and commercially available. Different suitable emitters are shown in Fig. 1 and 2. Thereby, emitters for the on-line process are illustrated in Fig. 1 and those for the in-line process in Fig. 2.

Usually, it is difficult to get good flow discharge performance with good processability and output rate. The present irrigation pipe, particularly irrigation pipe produced according to said in-line process, shows improved water dripping discharge performance together with good processing behavior compared to prior art. Usually, higher die swell (implies increased melt strength) contributes to improved water flow discharge. Moreover, die swell typically decreases with MFR increase, i.e. with molecular weight decrease. The MWD also influences the die swell behavior, i.e. the broader the MWD the higher the die swell. Unexpectedly, the multimodal polyethylene with the specific claimed combination of higher MFR and narrower molecular weight distribution (Mw/Mn) of the invention, compared to multimodal polyethylene used in the prior art for water drip irrigation, provides an excellent water flow discharge performance i.a. in terms of advantageous adherence of the emitter to the inner pipe wall enabling precise punching of perforations as well as desired controlling of water flow discharge rate at the end use site of the obtained irrigation pipe. Moreover, the polymer composition has also an excellent processing behavior enabling higher production rates for producing the irrigation pipes.

Further, the pipe preferably has a die swell ratio at 2.16 kg load of 1.2 or more. The maximum die swell ratio is not critical, and a typical example is up to 1.8.

Moreover, the water discharge performance can be controlled as required in the end application.

The present invention is further related to the use of a polymer composition comprising

(a) polymer base resin comprising a multimodal ethylene polymer having a density of less than 930 kg/m$^3$; and

(b) carbon black;

wherein the polymer composition has a molecular weight distribution Mw/Mn of 11.0 or less and a MFR$_5$ of 1.7 g/10 min or more for the production of a drip irrigation pipe provided with perforations in the pipe wall for discharging water, which perforations are arranged at intervals along the length of the pipe.

The present invention is further characterized by means of the following examples:

Examples:

1. Definitions

a) Melt Flow Rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR$_5$ of polyethylene is measured at a temperature 190 °C and a load of 5 kg, the MFR$_2$ of polyethylene at a temperature 190 °C and a load of 2.16 kg and the MFR$_{21}$ of polyethylene is measured at a temperature of 190 °C and a load of 21.6 kg. The quantity FRR (flow rate ratio) denotes the ratio of flow rates at different loads. Thus, FRR$_{21/5}$ denotes the ratio of MFR$_{21}$/MFR$_5$.

b) Density

Density of the polymer was measured according to ISO 1183-1:2004 Method A on compression moulded specimen prepared according to EN ISO 1872-2(February 2007) and is given in kg/m³.

c) Comonomer content

Comonomer content in polyethylene was measured in a known manner based on Fourier transform infrared spectroscopy (FTIR) calibrated with $^{13}$C-NMR, using Nicolet Magna 550 IR spectrometer together with Nicolet Omnic FTIR software.

Films having a thickness of about 250 μm were compression molded from the samples. Similar films were made from calibration samples having a known content of the comonomer. The comonomer content was determined from the spectrum from the wave number range of from 1430 to 1100 cm$^{-1}$. The absorbance is measured as the height of the peak by selecting the so-called short or long base line or both. The short base line is drawn in about 1410 - 1320 cm$^{-1}$ through the minimum points and the long base line about between 1410 and 1220 cm$^{-1}$. Calibrations need to be done specifically for each base line type. Also, the comonomer content of the unknown sample needs to be within the range of the comonomer contents of the calibration samples.

d) Molecular weight

Molecular weight averages (Mz, Mw and Mn), Molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ISO 16014-4:2003 and ASTM D 6474-99 using the following formulas:

$$M_n = \frac{\sum_{i=1}^{N} A_i}{\sum (A_i/M_i)} \qquad (1)$$

$$M_w = \frac{\sum_{i=1}^{N} (A_i \, x \, M_i)}{\sum A_i} \qquad (2)$$

$$M_z = \frac{\sum_{i=1}^{N} (A_i \, x \, M_i^2)}{\sum (A_i/M_i)} \qquad (3)$$

For a constant elution volume interval $\Delta V_i$, where $A_i$ and $M_i$ are the chromatographic peak slice area and polyolefin molecular weight (MW).

A PolymerChar GPC instrument, equipped with infrared (IR) detector was used with 3 x Olexis and 1x Olexis Guard columns from Polymer Laboratories and 1,2,4-trichlorobenzene (TCB, stabilized with 250 mg/L 2,6-Di tert butyl-4-methyl-phenol) as solvent at 160 °C and at a constant flow rate of 1 mL/min. 200 μL of sample solution were injected per analysis. The column set was calibrated using universal calibration (according to ISO 16014-2:2003) with at least 15 narrow MWD polystyrene (PS) standards in the range of 0,5 kg/mol to 11 500 kg/mol. Mark Houwink constants for PS, PE and PP used are as described per ASTM D 6474-99. All samples were prepared by dissolving 5.0 - 9.0 mg of polymer in 8 mL (at 160 °C) of stabilized TCB (same as mobile phase) for 2.5 hours for PP or 3 hours for PE at 160°C under continuous gentle shaking in the autosampler of the GPC instrument.

e) Die Swell

The extrudate swell (die swell) was evaluated by measuring afterwards the strands cut during the MFR measurement according to ISO 1133, at 190 °C with 2.16 kg load. Three pieces of ca 2.5 cm long strands were collected and the diameters were measured with a caliber (readability 0.01 mm).

The die swell results are expressed as swell ratios (SR), i.e. ratios of the diameter of the extruded strand to the diameter of the capillary die (=2.095 mm). The reported swell ratios were calculated from the averages of measured strand diameters.

f) Water Flow Discharge

Water flow discharge is measured according to IS 13488. Emission rate mentioned in the standard is expressed herein as Water Flow Discharge.

2. Materials

a) Example Ex 1: Production of the multimodal ethylene polymer of the base resin of the invention (a)

Into a first loop reactor having a volume of 50 dm$^3$ and operating at a temperature of 60 °C and a pressure of 65 bar 28 kg/h propane (C3), 1.2 kg/h ethylene (C2), and 0.2 kg/h hydrogen (H2) were introduced for conducting a pre-polymerization step. In addition 6.5 g/h of a solid polymerisation catalyst component produced according to the description of Example 1 of EP 1 378 528 was introduced into the reactor together with triethylaluminium cocatalyst so that the ratio of aluminium to titanium was 30 mol/mol. The polymer production rate in this prepolymerization reactor was about 1 kg/h.

The slurry was withdrawn intermittently from the prepolymerization reactor and directed to a second loop reactor having a volume of 500 dm$^3$ and operating at a temperature of 85 °C and a pressure of 61 bar for producing the LMW component. Additionally, 42 kg/h propane, ethylene, 1-butene comonomer (C4) and hydrogen were fed to the second loop reactor whereby the ethylene concentration, the molar 1-butene to ethylene ratio and the molar hydrogen to ethylene ratio for example Ex 1 are listed in Table 1. The production split, density and melt flow rates of the polymer fractions produced in the second loop reactor are listed in Table 1. The polymer production rate in this second loop reactor was about 30 kg/h.

The slurry was withdrawn intermittently from the second loop reactor by using settling legs and directed to a flash vessel operated at a temperature of 50°C and a pressure of 3 bar where the hydrocarbons were substantially removed from the polymer. From the flash vessel the polymer was directed to a gas phase reactor. The gas phase reactor was operated at a temperature of 80 °C and a pressure of 20 bar for producing the HMW component. Additional ethylene, 1-butene comonomer, nitrogen as inert gas and hydrogen were fed whereby the ethylene concentration, the molar 1-butene to ethylene ratio and the molar hydrogen to ethylene ratio as well as the production split, the melt flow rates and the density of the polymers of example Ex 1 withdrawn from the gas phase reactor are listed in Table 1. The polymer production rate in this gas phase reactor was about 40 kg/h.

The resulting polymer powder was dried from hydrocarbons and mixed with commercially available antioxidant and calcium stearate in conventional amounts. 2.6 wt% of a commercially available carbon black (supplier Cabot), based on the final polymer composition, was added in a form of a master batch which contained 39.5 wt.% of the carbon black and a carrier polymer which was a low density polyethylene homopolymer produced in a conventional manner in a high pressure process in the presence of peroxide as a radical initiator (an MFR$_2$ (2.16 kg, 190°C, ISO 1133) of 2.4 g/10 min, density of 923 kg/m$^3$). The master batch was added in an amount of 6.6 wt%, based in the final polymer composition. The mixture was then extruded in a conventional manner under nitrogen atmosphere into pellets by using a counter-rotating twin screw extruder CIM90P (manufactured by Japan Steel Works). The properties of the compounded composition (Inv.C1) are shown in Table 2. The temperature profile in each zone was 90/120/190/250°C.

b) Examples Ex 2 (multimodal ethylene polymer of the base resin of the invention (a)) and Reference Ref.Ex 1

The Ex 2 and Ref.Ex 1 were produced according to the procedure of Example 1 except that the conditions were as shown in Table 1. The properties of the compounded polyethylene compositions Inv.C2 of Ex 2 and Ref.C1 of Ex 1are shown in Table 2.

Table 1: Polymerization conditions

|  | Ex 1 | Ex 2 | Ref. Ex 1 |
|---|---|---|---|
| **Prepolymerizer:** |  |  |  |
| Temperature [°C] | 60 | 60 | 60 |
| Pressure [bar] | 65 | 65 | 65 |
| Production rate [kg/h] | 1 | 1 | 1 |
| Split [wt%] | 2 | 2 | 2 |
| **Loop reactor:** |  |  |  |
| Temperature [°C] | 85 | 85 | 85 |

(continued)

| Loop reactor: | | | |
|---|---|---|---|
| Pressure [bar] | 61 | 61 | 61 |
| H2/C2 [mol/kmol] | 400 | 380 | 300 |
| C2-concentration [mol%] | 7 | 7 | 7 |
| C4/C2 [mol/kmol] | 835 | 838 | 660 |
| Production rate [kg/h] | 30 | 30 | 22 |
| Split [wt%] | 42 | 41 | 39 |
| $MFR_2$ [g/10 min] | 400 | 270 | 300 |
| Density [$kg/m^3$] | 950 | 950 | 952 |
| **Gas phase reactor:** | | | |
| Temperature [°C] | 80 | 80 | 80 |
| Pressure [bar] | 20 | 20 | 20 |
| H2/C2 [mol/kmol] | 22 | 18 | 13 |
| C4/C2 [mol/kmol] | 790 | 847 | 700 |
| C2-concentration [mol%] | 21 | 23 | 19 |
| Split [wt%] | 56 | 58 | 59 |
| Production rate [kg/h] | 40 | 42 | 35 |
| $MFR_2$ [g/10 min] | 0.9 | 0.7 | 0.4 |
| $MFR_5$ [g/10 min] | 3.4 | 2.5 | 1.6 |
| $MFR_{21}$ [g/10 min] | 69 | 51 | 32 |
| Density [$kg/m^3$] | 921 | 919 | 921 |

**The preparation of test pipes:** The inventive test polymer compositions and the reference polymer composition were converted to test pipes using an RR Plast 65mm pipe extruder and DRTS equipment for emitter inserting and punching. Cylindrical pipes of 16mm OD were made of thickness 0.8 mm. All the test pipes were produced using the same pipe extruder, extrusion conditions, inserts as well as insertion and punching settings. The Die Swell and Water Flow Discharge performance (given in table 2) were measured from the test pipes.

Table 2: Properties of the compounded final polyethylene compositions and test pipes

| Final polymer composition | Inv.C1 | Inv.C2 | Ref.C1 |
|---|---|---|---|
| $MFR_2$ [g/10 min] | 0.9 | 0.7 | 0.4 |
| $MFR_5$ [g/10 min] | 3.4 | 2.5 | 1.6 |
| $MFR_{21}$ [g/10 min] | 69 | 51 | 32. |
| Density [$kg/m^3$] | 934 | 932 | 932 |
| Amount of carbon black [wt%*] | 2.6 | 2.5 | 2.3 |
| Mw [g/mol] | 111,000 | 118,000 | 123000 |
| Mn [g/mol] | 11,000 | 12,000 | 10000 |
| Mw/Mn | 10 | 10 | 12 |
| Test pipe properties | | | |
| Die swell, 2.16 kg [l/h] | 1.2 | 1.2 | 1.2 |

(continued)

| Final polymer composition | Inv.C1 | Inv.C2 | Ref.C1 |
|---|---|---|---|
| Water Flow Discharge,(3.8-4.2 l/h) | 4.5 | 4.2 | 4.75 |
| * wt% of carbon black was based on the total amount of the polymer composition (100wt%) | | | |

As can be seen from the Inv.C1 and Inv.C2, with a combination of higher MFR and narrower MWD, unexpectedly there is no change in die swell compared to Ref.C1 with lower MFR, and the water flow discharge rate is improved compared to Ref.C1 with broader MWD. Additionally the Inv.1 and Inv.2 have very advantageous processability.

**Claims**

1. Drip irrigation pipe provided with perforations in the pipe wall for discharging water, which perforations are arranged at intervals along the length of the pipe,
   wherein the pipe comprises a polymer composition comprising

   (a) a polymer base resin comprising a multimodal ethylene polymer wherein the base resin has a density of less than 930 kg/m$^3$, determined according to ISO 1183-1:2004; and
   (b) carbon black present in the polymer composition in an amount of 1.0 wt% to 10 wt%;

   wherein the polymer composition has a molecular weight distribution Mw/Mn of 11.0 or less, determined by GPC, and a MFR$_5$ of 1.7 g/10 min or more, determined according to ISO 1133; and
   the multimodal ethylene polymer comprises a low molecular weight (LMW) component and a high molecular weight (HMW) component, wherein the weight average molecular weight Mw of the HMW component is higher than the weight average molecular weight Mw of the LMW component, the LMW component is present in the multimodal ethylene polymer in an amount of 35 wt.% to 50 wt.% and the HMW component is present in the multimodal ethylene polymer in an amount 50 wt.% to 65 wt.%.

2. The pipe according to claim 1, wherein the pipe is provided with emitters arranged at the location of the perforation for controlling the water discharge from the perforation.

3. The pipe according to claim 1 or 2, wherein the multimodal ethylene polymer is a multimodal linear low density ethylene polymer obtainable by polymerization in the presence of a Ziegler-Natta catalyst system.

4. The pipe according to any of the preceding claims, wherein

   - the LMW component is an ethylene homopolymer or, preferably, copolymer of ethylene with at least one alpha-olefin comonomer comprising from 3 to 12 carbon atoms, preferably from 4 to 8 carbon atoms, and wherein the LMW component is preferably present in the multimodal ethylene polymer in an amount of 38 wt% to 50 wt%, preferably 38 wt% to 48 wt%, preferably 38 wt% to 46 wt%; and
   - the HMW component is an ethylene homopolymer or, preferably, copolymer of ethylene with at least one alpha-olefin comonomer comprising from 3 to 12 carbon atoms, preferably from 4 to 8 carbon atoms; and wherein the HMW component is preferably present in the multimodal ethylene polymer in an amount of 50 wt% to 62 wt%, preferably of 52 wt% to 62 wt%, preferably 54 wt% to 62 wt%.

5. The pipe according to any of the preceding claims, wherein the polymer base resin consists of the multimodal ethylene polymer.

6. The pipe according to any of the preceding claims, wherein the carbon black is present in the polymer composition in an amount of 1.5 wt% to 9.0 wt%, preferably 1.8 wt% to 8.0 wt%.

7. The pipe according to any of the preceding claims, wherein the polymer composition comprises (b1) a carbon black master batch (CBMB) comprising said carbon black (b) together with a carrier polymer and optional additives, whereby the amount of the carrier polymer of the (b1) CBMB is up to 5 wt% based on the total amount of the polymer composition.

8. The pipe according to any of the preceding claims having a diameter of 35 mm or less, preferably of 32 mm or less and, preferably, a wall thickness of less than 3 mm, preferably of less than 2.5 mm.

9. The pipe according to any of the preceding claims, wherein the pipe is produced using an in-line process and has a cross-section of round shape or ellipse shape, and wherein the pipe comprises emitters with cylindrical or flat rectangular shape.

10. A process for producing the drip irrigation pipe according to any of the preceding claims, comprising the steps of

- providing the polymer composition as defined in any of the preceding claims 1 to 7;
- mixing the polymer composition in a mixer, preferably in an extruder, to form a melt mixture of the polymer composition;
- forming, preferably extruding, the obtained melt mixture of the polymer composition into form of pipe, and
- punching perforations at intervals along the length of the formed, preferably extruded, pipe wall for discharging water from the punched perforations.

11. The process according to claim 10, wherein the process comprises steps of

- providing the polymer composition in form of pellets, wherein a pellet comprises, preferably consists of, the polymer composition as defined in any of the preceding claims 1 to 7;
- mixing at least said pellets of the polymer composition in a mixer, preferably in an extruder, to form a melt mixture of the polymer composition;
- forming, preferably extruding, the obtained melt mixture of polymer composition into form of pipe, and
- punching perforations at intervals along the length of the formed, preferably extruded, pipe wall for discharging water from the punched perforations.

12. The process according to claim 10 or 11 which is an in-line process comprising the steps of

- providing the polymer composition as defined in any of the preceding claims 1 to 7, preferably in form of pellets as defined in claim 11;
- mixing the polymer composition, preferably said pellets of the polymer composition, in a mixer, preferably in an extruder, to form a melt mixture of the polymer composition;
- forming, preferably extruding, the obtained melt mixture of polymer composition into form of pipe,
- inserting emitters at intervals into the inner pipe wall along the length of the pipe at time of the formation, preferably of the extrusion, of said pipe shape, and
- punching perforations to the formed pipe wall at the location of the inserted emitter for discharging water from the punched perforation through said inserted emitter.

13. Pellets of a polymer composition, wherein a pellet comprises, preferably consists of, the polymer composition as defined in any of the preceding claims 1 to 7.

14. Use of a polymer composition as defined in any of the preceding claims 1 to 7 or claim 13 for the production of a drip irrigation pipe provided with perforations in the pipe wall for discharging water, which perforations are arranged at intervals along the length of the pipe.

**Patentansprüche**

1. Tropfbewässerungsrohr, das in der Rohrwand zum Ausgeben von Wasser mit Perforationen versehen ist, wobei die Perforationen in Abständen entlang der Länge von dem Rohr angeordnet sind,
wobei das Rohr eine Polymerzusammensetzung umfasst, die das Folgende umfasst:

(a) ein Polymerbasisharz, das ein multimodales Ethylenpolymer umfasst, wobei das Basisharz eine Dichte von weniger als 930 kg/m$^3$ hat, bestimmt gemäß ISO 1183-1:2004; und
(b) Ruß, der in der Polymerzusammensetzung mit einer Menge von 1,0 Gew.-% bis 10 Gew.-% vorliegt;

wobei die Polymerzusammensetzung eine Molekulargewichtsverteilung Mw/Mn von 11,0 oder weniger, bestimmt mittels GPC, und einen MFR$_5$ von 1,7 g/10 min oder mehr hat, bestimmt gemäß ISO 1133; und

das multimodale Ethylenpolymer einen Bestandteil mit niedrigem Molekulargewicht (LMW) und einen Bestandteil mit hohem Molekulargewicht (HMW) umfasst, wobei das Gewichtsmittel des Molekulargewichts Mw des HMW-Bestandteils höher als das Gewichtsmittel des Molekulargewichts Mw des LMW-Bestandteils ist, wobei der LMW-Bestandteil in dem multimodalen Ethylenpolymer mit einer Menge von 35 Gew.-% bis 50 Gew.-% und der HMW-Bestandteil in dem multimodalen Ethylenpolymer mit einer Menge von 50 Gew.-% bis 65 Gew.-% vorliegt.

2. Rohr nach Anspruch 1, wobei das Rohr mit Emittern ausgestattet ist, die an dem Ort der Perforation angeordnet sind, um die Wasserausgabe aus der Perforation zu kontrollieren.

3. Rohr nach Anspruch 1 oder 2, wobei das multimodale Ethylenpolymer ein multimodales lineares Ethylenpolymer mit niedriger Dichte ist, das durch die Polymerisation in Gegenwart eines Ziegler-Natter-Katalysatorsystems erhältlich ist.

4. Rohr nach einem der vorhergehenden Ansprüche, wobei

- der LMW-Bestandteil ein Ethylenhomopolymer oder, vorzugsweise, ein Copolymer aus Ethylen mit mindestens einem alpha-Olefin-Comonomer ist, das 3 bis 12 Kohlenstoffatome, vorzugsweise 4 bis 8 Kohlenstoffatome umfasst, und wobei der LMW-Bestandteil in dem multimodalen Ethylenpolymer vorzugsweise mit einer Menge von 38 Gew.-% bis 50 Gew.-%, vorzugsweise von 38 Gew.-% bis 48 Gew.-%, und vorzugsweise von 38 Gew.-% bis 46 Gew.-% vorliegt; und
- der HMW-Bestandteil ein Ethylenhomopolymer oder, vorzugsweise, ein Copolymer aus Ethylen mit mindestens einem alpha-Olefin-Comonomer ist, das 3 bis 12 Kohlenstoffatome, vorzugsweise 4 bis 8 Kohlenstoffatome umfasst; und wobei der HMW-Bestandteil in dem multimodalen Ethylenpolymer vorzugsweise mit einer Menge von 50 Gew.-% bis 62 Gew.-%, vorzugsweise von 52 Gew.-% bis 62 Gew.-% und vorzugsweise von 54 Gew.-% bis 62 Gew.-% vorliegt.

5. Rohr nach einem der vorhergehenden Ansprüche, wobei das Polymerbasisharz aus dem multimodalen Ethylenpolymer besteht.

6. Rohr nach einem der vorhergehenden Ansprüche, wobei der Ruß in der Polymerzusammensetzung mit einer Menge von 1,5 Gew.-% bis 9,0 Gew.-%, vorzugsweise von 1,8 Gew.-% bis 8,0 Gew.-% vorliegt.

7. Rohr nach einem der vorhergehenden Ansprüche, wobei die Polymerzusammensetzung (b1) eine Rußvormischung (CBMB) umfasst, die den Ruß (b) zusammen mit einem Trägerpolymer und optional Zusatzstoffen umfasst, wobei die Menge des Trägerpolymers von der (b1) CBMB bis zu 5 Gew.-% beträgt, basierend auf dem Gesamtgewicht der Polymerzusammensetzung.

8. Rohr nach einem der vorhergehenden Ansprüche, das einen Durchmesser von 35 mm oder weniger und vorzugsweise von 32 mm oder weniger, und, vorzugsweise, eine Wanddicke von weniger als 3 mm und vorzugsweise von weniger als 2,5 mm hat.

9. Rohr nach einem der vorhergehenden Ansprüche, wobei das Rohr unter Verwendung eines In-Line-Prozesses hergestellt wird und einen Querschnitt mit runder Form oder elliptischer Form hat, und wobei das Rohr Emitter mit einer zylindrischen oder flachen rechteckigen Form umfasst.

10. Verfahren zur Herstellung des Tropfbewässerungsrohrs nach einem der vorhergehenden Ansprüche, umfassend die folgenden Schritte:

- Bereitstellen der Polymerzusammensetzung nach einem der vorhergehenden Ansprüche 1 bis 7;
- Mischen der Polymerzusammensetzung in einem Mischer, vorzugsweise in einem Extruder, um eine Schmelzmischung der Polymerzusammensetzung zu bilden;
- Formen, vorzugsweise Extrudieren, von der erhaltenen Schmelzmischung der Polymerzusammensetzung in die Form eines Rohrs, und
- Stanzen von Perforationen in Abständen entlang der Länge der geformten, vorzugsweise extrudierten, Rohrwand zum Ausgeben von Wasser aus den gestanzten Perforationen.

11. Verfahren nach Anspruch 10, wobei das Verfahren die folgenden Schritte umfasst:

- Bereitstellen der Polymerzusammensetzung in Form von Pellets, wobei ein Pellet die Polymerzusammensetzung nach einem der vorhergehenden Ansprüche 1 bis 7 umfasst und vorzugsweise aus der Polymerzusammensetzung nach einem der vorhergehenden Ansprüche 1 bis 7 besteht;
- Mischen von zumindest den Pellets aus der Polymerzusammensetzung in einem Mischer, vorzugsweise in einem Extruder, um eine Schmelzmischung der Polymerzusammensetzung zu bilden;
- Formen, vorzugsweise Extrudieren, von der erhaltenen Schmelzmischung der Polymerzusammensetzung in die Form eines Rohrs, und
- Stanzen von Perforationen in Abständen entlang der Länge der geformten, vorzugsweise extrudierten, Rohrwand zum Ausgeben von Wasser aus den gestanzten Perforationen.

**12.** Verfahren nach Anspruch 10 oder 11, wobei das In-Line-Verfahren die folgenden Schritte umfasst:

- Bereitstellen der Polymerzusammensetzung nach einem der vorhergehenden Ansprüche 1 bis 7, vorzugsweise in Form von Pellets nach Anspruch 11;
- Mischen der Polymerzusammensetzung, vorzugsweise der Pellets aus der Polymerzusammensetzung, in einem Mischer, vorzugsweise in einem Extruder, um eine Schmelzmischung der Polymerzusammensetzung zu bilden;
- Formen, vorzugsweise Extrudieren, von der erhaltenen Schmelzmischung der Polymerzusammensetzung in die Form eines Rohrs,
- Einsetzen von Emittern in Abständen in die innere Rohrwand entlang der Länge des Rohrs, und zwar zum Zeitpunkt der Formung, vorzugsweise der Extrusion, von der Rohrform, und
- Stanzen von Perforationen in die geformte Rohrwand an dem Ort des eingesetzten Emitters zum Ausgeben von Wasser aus der gestanzten Perforation durch den eingesetzten Emitter.

**13.** Pellets einer Polymerzusammensetzung, wobei ein Pellet die Polymerzusammensetzung nach einem der vorhergehenden Ansprüche 1 bis 7 umfasst und vorzugsweise aus der Polymerzusammensetzung nach einem der vorhergehenden Ansprüche 1 bis 7 besteht.

**14.** Verwendung einer Polymerzusammensetzung nach einem der vorhergehenden Ansprüche 1 bis 7 oder nach Anspruch 13 zur Herstellung eines Tropfbewässerungsrohrs, das in der Rohrwand zum Ausgeben von Wasser mit Perforationen versehen ist, wobei die Perforationen in Abständen entlang der Länge von dem Rohr angeordnet sind.

**Revendications**

**1.** Tuyau d'irrigation goutte à goutte doté de perforations dans la paroi du tuyau pour décharger de l'eau, lesquelles perforations sont agencées à intervalles le long de la longueur du tuyau, lequel tuyau comprend une composition de polymère comprenant

(a) une résine de base polymère comprenant un polymère d'éthylène multimodal, laquelle résine de base a une masse volumique, déterminée conformément à la norme ISO 1183-1:2004, inférieure à 930 kg/m$^3$ ; et
(b) du noir de carbone présent dans la composition de polymère en une quantité de 1,0 % en poids à 10 % en poids ;

dans lequel la composition de polymère a une distribution des masses moléculaires Mw/Mn, déterminée par GPC, de 11,0 ou moins, et un MFR$_5$, déterminé conformément à la norme ISO 1133, de 1,7 g/10 min ou plus ; et le polymère d'éthylène multimodal comprend un composant de faible masse moléculaire (LMW) et un composant de masse moléculaire élevée (HMW), le composant LMW étant présent dans le polymère d'éthylène multimodal en une quantité de 35 % en poids à 50 % en poids et le composant HMW étant présent dans le polymère d'éthylène multimodal en une quantité, la masse moléculaire moyenne en masse Mw du composant HMW étant supérieure à la masse moléculaire moyenne en masse Mw, de 50 % en poids à 65 % en poids.

**2.** Tuyau selon la revendication 1, lequel tuyau est doté d'émetteurs agencés à l'emplacement de la perforation pour contrôler la décharge d'eau par la perforation.

**3.** Tuyau selon la revendication 1 ou 2, dans lequel le polymère d'éthylène multimodal est un polymère d'éthylène basse densité linéaire multimodal pouvant être obtenu par polymérisation en présence d'un système catalyseur de Ziegler-Natta.

**4.** Tuyau selon l'une quelconque des revendications précédentes, dans lequel

- le composant LMW est un homopolymère d'éthylène ou, de préférence, un copolymère d'éthylène avec au moins un comonomère d'α-oléfine comprenant de 3 à 12 atomes de carbone, de préférence de 4 à 8 atomes de carbone, lequel composant LMW est de préférence présent dans le polymère d'éthylène multimodal en une quantité de 38 % en poids à 50 % en poids, de préférence de 38 % en poids à 48 % en poids, de préférence de 38 % en poids à 46 % en poids ; et
- le composant HMW est un homopolymère d'éthylène ou, de préférence, un copolymère d'éthylène avec au moins un comonomère d'α-oléfine comprenant de 3 à 12 atomes de carbone, de préférence de 4 à 8 atomes de carbone, lequel composant HMW est de préférence présent dans le polymère d'éthylène multimodal en une quantité de 50 % en poids à 62 % en poids, de préférence de 52 % en poids à 62 % en poids, de préférence de 54 % en poids à 62 % en poids.

**5.** Tuyau selon l'une quelconque des revendications précédentes, dans lequel la résine de base polymère est constituée du polymère d'éthylène multimodal.

**6.** Tuyau selon l'une quelconque des revendications précédentes, dans lequel le noir de carbone est présent dans la composition de polymère en une quantité de 1,5 % en poids à 9,0 % en poids, de préférence de 1,8 % en poids à 8,0 % en poids.

**7.** Tuyau selon l'une quelconque des revendications précédentes, dans lequel la composition de polymère comprend (b1) un mélange maître de noir de carbone (CBMB) comprenant ledit noir de carbone (b) conjointement avec un polymère de support et des additifs optionnels, la quantité du polymère de support du CBMB (b1) allant jusqu'à 5 % en poids par rapport à la quantité totale de la composition de polymère.

**8.** Tuyau selon l'une quelconque des revendications précédentes, ayant un diamètre de 35 mm ou moins, de préférence de 32 mm ou moins et, de préférence, une épaisseur de paroi inférieure à 3 mm, de préférence inférieure à 2,5 mm.

**9.** Tuyau selon l'une quelconque des revendications précédentes, lequel tuyau est produit par utilisation d'un procédé en ligne et a une section transversale de forme ronde ou de forme elliptique, et lequel tuyau comprend des émetteurs ayant une forme rectangulaire plate ou cylindrique.

**10.** Procédé pour produire le tuyau d'irrigation goutte à goutte de l'une quelconque des revendications précédentes, comprenant les étapes consistant à

- disposer de la composition de polymère telle que définie dans l'une quelconque des revendications 1 à 7 ;
- mélanger la composition de polymère dans un mélangeur, de préférence dans une extrudeuse, pour former un mélange fondu de la composition de polymère ;
- façonner, de préférence extruder, le mélange fondu obtenu de la composition de polymère sous la forme d'un tuyau, et
- percer des perforations à intervalles le long de la longueur de la paroi du tuyau façonné, de préférence extrudé, pour décharger de l'eau par les perforations percées.

**11.** Procédé selon la revendication 10, lequel procédé comprend les étapes consistant à

- disposer de la composition de polymère sous la forme de pastilles, une pastille comprenant, de préférence étant constituée de, la composition de polymère telle que définie dans l'une quelconque des revendications 1 à 7 ;
- mélanger au moins lesdites pastilles de la composition de polymère dans un mélangeur, de préférence dans une extrudeuse, pour former un mélange fondu de la composition de polymère ;
- façonner, de préférence extruder, le mélange fondu obtenu de la composition de polymère sous la forme d'un tuyau, et
- percer des perforations à intervalles le long de la longueur de la paroi du tuyau façonné, de préférence extrudé, pour décharger de l'eau par les perforations percées.

**12.** Procédé selon la revendication 10 ou 11, qui est un procédé en ligne comprenant les étapes consistant à

- disposer de la composition de polymère telle que définie dans l'une quelconque des revendications 1 à 7, de préférence sous la forme de pastilles telles que définies dans la revendication 11 ;

- mélanger la composition de polymère, de préférence lesdites pastilles de la composition de polymère, dans un mélangeur, de préférence dans une extrudeuse, pour former un mélange fondu de la composition de polymère ;

- façonner, de préférence extruder, le mélange fondu obtenu de la composition de polymère sous la forme d'un tuyau,

- insérer des émetteurs à intervalles dans la paroi intérieure du tuyau le long de la longueur du tuyau au moment du façonnage, de préférence de l'extrusion, de ladite forme de tuyau, et

- percer des perforations dans la paroi du tuyau façonné à l'emplacement de l'émetteur inséré pour décharger de l'eau par la perforation percée à travers ledit émetteur inséré.

13. Pastilles pour une composition de polymère, dans lesquelles une pastille comprend, de préférence est constituée de, la composition de polymère telle que définie dans l'une quelconque des revendications 1 à 7.

14. Utilisation d'une composition de polymère telle que définie dans l'une quelconque des revendications 1 à 7 ou la revendication 13 pour la production d'un tuyau d'irrigation goutte à goutte doté de perforations dans la paroi du tuyau pour décharger de l'eau, lesquelles perforations sont agencées à intervalles le long de la longueur du tuyau.

Fig 1

.Cylindrical Type ————————————➤

.Flat Type

Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005095509 A
- US 4582816 A
- US 3405109 A
- US 3324093 A
- EP 479186 A
- US 5391654 A
- US 3374211 A
- US 3242150 A
- EP 1310295 A
- EP 891990 A
- EP 1415999 A
- EP 1591460 A
- WO 2007025640 A
- US 4933149 A
- EP 684871 A
- WO 2005087261 A
- US 4578879 A
- EP 600414 A
- EP 721798 A

- US 4543399 A
- EP 699213 A
- WO 9425495 A
- EP 696293 A
- WO 0029452 A
- US 4621952 A
- EP 188125 A
- EP 250169 A
- EP 579426 A
- US 5026795 A
- US 4803251 A
- US 4532311 A
- US 4855370 A
- EP 560035 A
- EP 707513 A
- EP 688794 A
- WO 0155230 A
- EP 1378528 A

**Non-patent literature cited in the description**

- **GELDART ; BAYENS.** The Design of Distributors for Gas-fluidised Beds. *Powder Technology,* 1985, vol. 42